# EUROPÄISCHE PATENTSCHRIFT

(11) **EP 1 370 712 B1**
(45) Veröffentlichungstag und Bekanntmachung des Hinweises auf die Patenterteilung: **01.10.2008**
(21) Anmeldenummer: 02745190.5
(22) Anmeldetag: 26.02.2002
(51) Int. Cl.: C23C 30/00

(54) **HARTSTOFFBESCHICHTETES BAUTEIL MIT ZWISCHENSCHICHT ZUR VERBESSERUNG DER HAFTFESTIGKEIT DER BESCHICHTUNG**
STRUCTURAL COMPONENT COATED WITH A HARD MATERIAL AND COMPRISING AN INTERMEDIATE LAYER FOR IMPROVING THE ADHESIVE STRENGTH OF THE COATING
COMPOSANT REVETU D'UNE MATIERE DURE ET COMPORTANT UNE COUCHE INTERMEDIAIRE DESTINEE A AMELIORER L'ADHERENCE DU REVETEMENT

(30) Priorität: 28.02.2001 DE 10109523
(43) Veröffentlichungstag der Anmeldung: 17.12.2003
(73) Patentinhaber: CeramTec AG, 73207 Plochingen (DE)
(72) Erfinder: RICHTER, Gert, 75196 Remchingen (DE); FRIPAN, Michael, 71522 Backnang (DE); VON BÜREN, Daniel, CH-5013 Niedergösgen (CH)
(74) Vertreter: Uppena, Franz
(86) Internationale Anmeldenummer: PCT/EP2002/002026
(87) Internationale Veröffentlichungsnummer: WO 2002/083984

(56) Entgegenhaltungen:
- EP-A- 0 947 607
- WO-A-00/52225
- WO-A-00/68453
- WO-A-99/29920
- US-A- 4 501 786

## Beschreibung

Die Erfindung betrifft ein Bauteil aus einem metallischen oder keramischen Werkstoff mit einer Hartstoffbeschichtung nach dem Oberbegriff des ersten Anspruchs sowie ein Verfahren zum Aufbringen dieser Beschichtung nach dem dreizehnten Anspruch.

Bauteile, die hohen Belastungen ausgesetzt sind, insbesondere durch Verschleiß, können durch eine Hartstoffbeschichtung geschützt werden. Um die guten mechanischen und thermischen Eigenschaften des Werkstoffs voll ausnutzen zu können, müssen insbesondere die tribochemischen und die thermochemischen Reaktionen zwischen den Werkstoffen des Werkstücks und des Werkzeugs, weitgehend vermieden werden. So ist es beispielsweise bei Zerspanungswerkzeugen bereits bekannt, die Verschleißfestigkeit durch eine Hartstoffbeschichtung zu verbessern Die Beschichtungen werden nicht nur auf spangebenden Werkzeugen aus Metall, insbesondere Schnellarbeitsstahl (HSS) oder Hartmetall (HM), aufgebracht, sondern auch auf Werkzeuge aus keramischen Werkstoffen wie beispielsweise Siliziumnitrid-Schneidplatten. Auch bei Umformwerkzeugen kann der Verschleiß durch eine Hartstoffbeschichtung herabgesetzt werden.

Für die erwünschten Verbesserungen der Eigenschaften, insbesondere bei Zerspanungswerkzeugen, genügen in der Regel Schichtdicken im Mikrometerbereich. Solche Schichten lassen sich beispielsweise aus der Gasphase nach dem PVD-, CVD- oder Plasma-CVD-Verfahren abscheiden. Je nach Werkstoff sind dadurch Schichtdicken einer Schicht von unter 1 µm bis über 20 µm möglich.

Die angegebenen Verfahren ermöglichen es, nicht nur einzelne Schichten aus einem Werkstoff abzuscheiden. Sowohl bezüglich der Anzahl der Werkstoffe, die in der Schichtfolge miteinander kombinierbar sind, als auch der Anzahl der Schichten sind viele Variationen möglich. Vor allem beim Einsatz von Zerspanungswerkzeugen, kommen vorzugsweise Schichtwerkstoffe auf Titan-Basis, wie beispielsweiseTitannitrid, -carbid, -oxid, -carbonnitrid sowie Schichten aus einer oder mehreren Modifikationen des Aluminiumoxids zum Einsatz.

Auf Grund der unterschiedlichen thermischen Ausdehnung zwischen dem Substratwerkstoff und dem Schichtwerkstoff sowie bei einer Beschichtung aus mehreren Schichten können aufgrund unterschiedlicher Schichtwerkstoffe große Spannungen entstehen. Insbesondere bei zunehmender Dicke der Beschichtung steigt die Spannung an und dadurch die Gefahr des Abplatzens der Beschichtung.

Zur Verbesserung der Haftfestigkeit einer Beschichtung ist es beispielsweise aus der DE 36 08 734 C1 bekannt, bei beschichteten Keramik-Wendeschneidplatten auf einen Grundkörper aus gesinterten keramischen Werkstoffen, der mit einer keramischen Nutzschicht versehen ist, eine Zwischenschicht aus Siliziumdioxid abzuscheiden. Dieser Stand der Technik betrifft allerdings nur die Beschichtung mit einer Schicht.

Aus der WO 00/52225 ist ein beschichtetes Schneidwerkzeug bekannt, bei dem sich zwischen mindestens zwei aufgedampften Schichten eine dünnere Zwischenschicht befindet. Diese kann aus demselben oder einem anderen Werkstoff bestehen wie die anderen Schichten.

In der WO 00/68453 wird ein Verfahren zur Beschichtung von Werkzeugen mit verschleißfesten Werkstoffen beschrieben. Die Beschichtung besteht aus nanokristallinem Aluminium-Spinell.

Die US 4,501,786 A betrifft die Verbesserung der Haftung von oxidischen Verschleissschichten auf Substraten aus Hartmetall oder zementierten Karbiden.

Zur Verbesserung der Haftung zwischen einer TiC-Schicht und einer Oxidschicht wird eine Bindeschicht aus einem Carbid oder Oxidcarbid vorgeschlagen.

In den Patentanmeldungen EP 0947607 A2 und WO 99/29920 werden Beschichtungen für Schneidwerkzeuge beschrieben, die aus Schichtfolgen unterschiedlicher Zusammensetzung bestehen. Der technische Effekt ist die Verbesserung der Härte sowie der Lebensdauer des Werkzeugs.

Es ist die Aufgabe der vorliegenden Erfindung, die Haftfestigkeit der Hartstoffschichten auf dem Substratwerkstoff eines Bauteils aus einem metallischen oder keramischen Werkstoff sowie der Schichten untereinander zu erhöhen.

Die Lösung der Aufgabe erfolgt bei einem Bauteil nach dem Oberbegriff des ersten Anspruchs mit Hilfe seiner kennzeichnenden Merkmale. Im dreizehnten Anspruch wird das erfindungsgemäße Verfahren zur Herstellung dieser Bauteile beansprucht. Vorteilhafte Ausgestaltungen werden in den abhängigen Ansprüchen beansprucht.

Ein erfindungsgemäßes Bauteil mit einer Beschichtung zeichnet sich dadurch aus, dass mindestens zwischen zwei Schichten der Beschichtung eine Zwischenschicht angeordnet ist, die überwiegend oder ausschließlich aus einer Werkstoffkomponente eines Elements aus der vierten bis achten Nebengruppe der vierten und fünften Periode des Periodensystems besteht. Die Anzahl der Zwischenschichten wird auf die Anzahl der Schichten der Beschichtungabgestimmt. Je dicker eine Beschichtung ist und je mehr Schichten für den Schichtaufbau erforderlich sind, desto vorteilhafter ist es, Zwischenschichten vorzusehen.

Insbesondere eignen sich die Elemente aus der achten Nebengruppe der vierten Periode zur Bildung einer Zwischenschicht. Beispielsweise wird bei Schichten auf Titan-Basis die Haftfestigkeit bevorzugt durch Zwischenschichten aus einer Werkstoffkomponente des Elements Kobalt gesteigert.

Das Aufbringen einer Hartstoffbeschichtung erfolgt in bekannter Weise nach dem PVD-, CVD- oder Plasma-CVD-Verfahren aus der Gasphase. Die erfindungsgemäße Zwischenschicht wird ebenfalls aus der Gasphase abgeschieden. Dazu wird das Element der Zwischenschicht ebenfalls in die Gasphase überführt. Wird beispielsweise eine Schicht auf Titan-Basis wie Ti(C,N) nach dem CVD-Verfahren aus der Gasphase aufgebaut, kann zur Bildung einer Zwischenschicht auf basis eines metallischen Werkstoffs ein Presskörper in den Reaktor eingebracht werden. Das Abscheiden einer Schicht, beispielsweise auf Titan-Basis, erfolgt vorzugsweise bei einer Temperatur von etwa 1000 °C und einem Druck geringfügig unterhalb des Atmosphärendrucks. Unter diesen Bedingungen bleibt das Metall in der Gasphase und schlägt sich nicht als Schichtwerkstoff nieder. Erst wenn der Druck abgesenkt wird, erfolg der Aufbau der Zwischenschicht mit der metallischen Werkstoffkomponente. Diese Zwischenschicht kann, je nach den bei der Beschichtung eingestellten Parametern beziehungsweise der zur Verfügung stehenden Menge der metallischen Werkstoffkomponente, als eine zusammenhängende Schicht ausgebildet sein oder in Form von Einlagerungsbereichen vorliegen. Ist der Vorrat an der metallischen Werkstoffkomponente verbraucht oder wird der Druck auf das vorhergehende Niveau wieder erhöht, stoppt auch der Aufbau der Zwischenschicht. Diese. Zwischenschichten haben eine Dicke von 0,05 µm bis 5 µm. Durch eine Zwischenschicht werden die Spannungen in der Beschichtung herabgesetzt und dadurch die Gefahr des Abplatzens wesentlich verringert.

Die Schichten weisen in der Regel eine Zusammensetzung auf, wie sie entsprechend der bekannten Beschichtungsverfahren entstehen. Beschichtungen auf Titan-Basis bestehen in der Regel aus folgenden Verbindungen: TiN, Ti(C,N), TiC, TiO, TiON und TiCON.

Die Beschichtungen können aber auch aus mindestens einer der Modifikationen des Aluminiumoxids bestehen.

Die Beschichtung kann einphasig, das heißt aus einem Werkstoff sein. Die Beschichtung kann auch mehrphasig sein, d.h. aus einer abwechselnden Folge von Schichten unterschiedlicher Werkstoffe, beispielsweise auf Titan-Basis und Aluminiumoxid. Eine solche Beschichtung aus mehreren Schichten kann eine Dicke bis zu 60 µm und mehr erreichen.

Eine solche Beschichtung, auch Multilayer-Beschichtung genannt, könnte beispielsweise wie folgt aufgebaut sein: Eine oder mehrere Titan-basierte Schichten, eine Aluminiumoxidschicht in der α- und/oder κ-Modifikation und gegebenenfalls eine oder mehrere Deckschichten auf Titan-Basis, wobei mindestens zwischen zwei Titan-basierten Schichten eine Zwischenschicht angeordnet ist.

Jede der Schichten, außer der Zwischenschicht, kann, je nach verwendetem Werkstoff, eine Dicke von etwa 10 µm, beispielsweise bei einer Titan-basierten Schicht, bis zu etwa 20 µm, beispielsweise bei einer Atuminiumoxidschicht, aufweisen, so dass Schichtdicken über 60 µm erreicht werden können. Um die Haftfestigkeit einer Beschichtung beispielsweise in einer solchen Dicke zu gewährleisten, ist mindestens eine Zwischenschicht zwischen den Titan-basierten Schichten erforderlich.

Die Erfindung gibt vorteilhaft die Möglichkeit, jeden Substratwerkstoff, den Grundwerkstoff des Werkzeugs, sei es Schnellarbeitsstahl, Hartmetall oder auch keramische Werkstoffe wie beispielsweise Siliziumnitrid. SiAlON, Aluminiumnitrid oder auf Al₂O₃-Basis, mit einer gut haftenden Beschichtung zu versehen, die den Verschleiß wesentlich herabsetzt. Dabei kann der Substratwerkstoff nach den erwünschten Eigenschaften gewählt werden.

An Hand eines Ausführungsbeispiels wird die Erfindung näher erläutert.

Das Ausführungsbeispiel zeigt schematisch dargestellt einen Querschliff durch ein beschichtetes Bauteil 1 aus Siliziumnitrid, Si₃N₄. Auf dem Grundwerkstoff 2 des Bauteils 1, dem Substrat mit den hellen Einlagerungen aus den zur Herstellung erforderlichen Sinterhilfsmitteln, befindet sich eine Beschichtung 3 aus mehreren Schichten, eine Multilayer-Beschichtung. Die Beschichtung 3 baut sich im vorliegende Ausführungsbeispiel aus vier einzelnen, unterschiedlich dicken Schichten auf.

Auf .das Substrat 2 folgt eine Schicht 4 auf Titan-Basis, im vorliegenden Ausführungsbeispiel aus Ti(C,N). Bei dem Beschichtungsprozess laufen beim Aufbau der Schichten auf Titan-Basis folgende bekannte chemische Reaktionen ab: TiCl₄ + ½N₂+2H₂= TiN + 4HCl, TiCl₄ + CH₄ = TiC +4 HCl und-TiCl4 + CH₄+½N₂=Ti(C,N) +4 HCl. Darauf folgt, gut sichtbar, die Zwischenschicht 5, überwiegend auf Kobalt-Basis. Während die erste Schicht 4 bei einer Temperatur von etwa 1000 °C und einem Druck von 800 mbar abgeschieden wurde, wurde bei dieser Schicht 5 bei gleicher Temperatur der Druck auf unter 500 mbar gesenkt. Während zunächst eine zusammenhängende dichte Teilschicht 6 der Werkstoffkomponente Kobalt abgeschieden wurde, :bildet sich beim Verarmen des Gehalts an Kobalt aus dem Gas zum Aufbau der Schichten auf Titan-Basis eine Teitschicht 7, die überwiegend aus TiC besteht, wobei noch Einlagerungen 8 der Werkstoffkomponente Kobalt sichtbar sind. Bei der Änderung der Beschichtungsparameter in den alten Zustand wird wieder eine Schicht 9 auf Titan-Basis erzeugt Diese Schicht 9 ist an der helleren Färbung erkennbar. Sie weist die gleiche Zusammensetzung auf wie die erste Schicht, die Schicht 4: Ti(C,N). Die letzte Schicht 10 ist eine Deckschicht aus Aluminiumoxid, Al₂O₃. Der Beschichtungsprozess läuft nach folgender bekannter Reaktion ab: 2AlCl₃ + 3H₂O = Al₂O₃ + 6HCl.

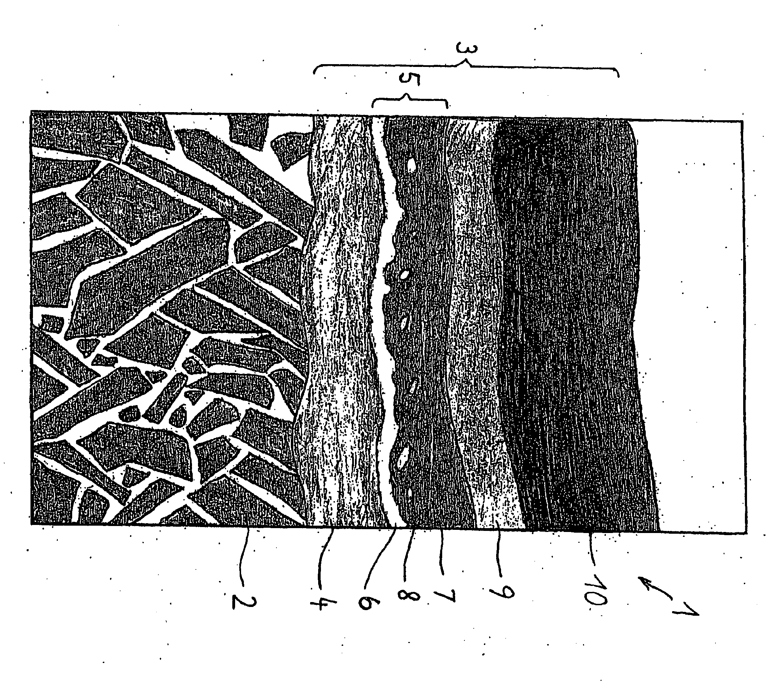

## Patentansprüche

1. Bauteil aus einem metallischen oder keramischen Werkstoff zur spangebenden oder umformenden Bearbeitung von Werkstücken, das eine Hartstoffbeschichtung aufweist, wobei die Beschichtung aus mehreren Schichten aufgebaut ist und die Schichten auch aus unterschiedlichen Werkstoffen bestehen können, **dadurch gekennzeichnet, dass** mindestens zwischen zwei Schichten (4, 9) der Beschichtung (3) eine dem Abbau der Spannungen zwischen den Schichten der Beschichtung (3) dienende Zwischenschicht (5) angeordnet ist, die überwiegend oder ausschließlich aus einer metallischen Werkstoffkomponente eines Elements aus der vierten bis achten Nebengruppe der vierten und fünften Periode des Periodensystems in Abhängigkeit von den bei der Beschichtung eingestellten Parametern beziehungsweise der zur Verfügung stehenden Menge der metallischen Werkstoffkomponente als zusammenhängende Schicht (6) der metallischen Werkstoffkomponente oder als Teilschicht (7) mit Einlagerungen (8) der metallischen Werkstoffkomponente gebildet ist.

2. Bauteil nach Anspruch 1, **dadurch gekennzeichnet, dass** die Zwischenschicht (5) etwa 0,05 µm bis etwa 5 µm dick ist.

3. Bauteil nach Anspruch 1 oder 2, **dadurch gekennzeichnet, dass** das Element der Werkstoffkomponente (6, 8) der Zwischenschicht (5) ein Element aus der achten Nebengruppe der vierten Periode des Periodensystems ist.

4. Bauteil nach einem der Ansprüche 1 bis. 3, **dadurch gekennzeichnet, dass** die Schichten (4, 9) der Beschichtung (3) aus einem Werkstoff auf Titan-Basis bestehen.

5. Bauteil nach Anspruch 4, **dadurch gekennzeichnet, dass** die Dicke der Schicht (4, 9) bis zu 10 µm beträgt.

6. Bauteil nach einem der Ansprüche 1 bis 3, **dadurch gekennzeichnet, dass** die Beschichtung (3) durch eine Schicht (10) aus mindestens einer der Modifikationen des Aluminiumoxids überdeckt ist.

7. Bauteil nach Anspruch 6, **dadurch gekennzeichnet, dass** die Dicke der Schicht (10) bis zu 20 µm beträgt.

8. Bauteil nach einem der Ansprüche 1 -bis 7, **dadurch gekennzeichnet, dass** der Aufbau einer Beschichtung (3) aus mehreren Schichten (4, 9, 10) aus einer abwechselnden Folge von Schichten auf Titan-Basis (4, 9) und aus Aluminiumoxid (10) in mindestens einer seiner Modifikationen besteht.

9. Bauteil nach Anspruch 8, **dadurch gekennzeichnet, dass** eine Beschichtung des Bauteils aus mehreren Schichten wie folgt aufgebaut ist: mehrere Titan-basierte Schichten, eine Aluminiumoxidschicht in der α- und/oder κ-Modifikation und gegebenenfalls eine oder mehrere Deckschichten auf Titan-Basis, wobei mindestens zwischen zwei Titan-basierten Schichten eine Zwischenschicht angeordnet ist.

10. Bauteil nach einem der Ansprüche 1 bis 9, **dadurch gekennzeichnet, dass** der Substratwerkstoff (2) des Bauteils (1)Siliziumnitrid oder SiAlON ist

11. Bauteil nach einem der Ansprüche 1 bis 9, **dadurch gekennzeichnet, dass** der Substratwerkstoff des Bauteils Aluminiumnitrid ist.

12. Bauteil nach einem der Ansprüche 1 bis 9, **dadurch gekennzeichnet, dass** der Substratwerkstoff des Bauteils ein Werkstoff auf Al₂O₃-Basis ist.

13. Verfahren zum Aufbringen einer Hartstoffbeschichtung auf ein Bauteil aus einem metallischen oder keramischen Werkstoff als Substrat zur spangebenden oder umformenden Bearbeitung von Werkstücken, wobei die Beschichtung aus mehreren Schichten aufgebaut werden kann und die schichten auch aus unterschiedlichen Werkstoffen bestehen können, insbesondere nach einem der Ansprüche 1 bis 12, **dadurch gekennzeichnet, dass** beim Auftragen der Schichten nach dem PVD-, CVD- oder Plasma-CVD-Verfahren zwischen zwei Schichten der Beschichtung mindestens eine dem Abbau der Spannungen zwischen den Schichten der Beschichtung dienende Zwischenschicht ebenfalls aus der Gasphase abgeschieden wird, wobei diese Zwischenschicht überwiegend oder ausschließlich aus einer metallischen Werkstoffkomponente eines Elements aus der vierten bis achten Nebengruppe der vierten und fünften Periode des Periodensystems in Abhängigkeit der bei der Beschichtung eingestellten Parameter beziehungsweise der zur Verfügung stehenden Menge der metallischen Werkstoffkomponente als zusammenhängende Schicht der metallischen Werkstoffkomponente oder als Schicht aus der Werkstoffkomponente der Hartstoffschichten der Beschichtung mit Einlagerungen der metallischen Werkstoffkomponente gebildet wird.

14. Verfahren nach Anspruch 13, **dadurch gekennzeichnet, dass** die Menge der Abscheidung des Elements aus der Werkstoffkomponente über die Variation des Druckes gesteuert wird.

15. Verfahren nach Anspruch 14, **dadurch gekennzeichnet, dass** die Zwischenschicht durch Absenken des Druckes gebildet wird.

16. Verfahren nach einem der Ansprüche 13 bis 15, **dadurch gekennzeichnet, dass** die Dicke der Zwischenschicht über die zur Abscheidung bereitgehaltene Menge des Elements gesteuert wird.

17. Verfahren nach einem der Ansprüche 13 bis 16, **dadurch gekennzeichnet, dass** die Zwischenschicht bis auf eine Dicke von 0,05 µm bis 5 µm aufgebaut wird.

18. Verfahren nach einem der Ansprüche 13 bis 17, **dadurch gekennzeichnet, dass** bei einer Beschichtung aus mehreren Schichten auf dem Bauteil in abwechselnder Folge Schichten auf Titan-Basis und Schichten aus Aluminiumoxid in mindestens einer seiner Modifikationen abgeschieden werden.

19. Verfahren nach Anspruch 18, **dadurch gekennzeichnet, dass** bei einer Beschichtung des Bauteils mit mehreren Schichten zunächst. Titan-basierte Schichten, darauf eine Aluminiumoxidschicht in der α- und/oder κ-Modifikation und darauf gegebenenfalls eine oder mehrere Deckschichten auf Titan-Basis aufgetragen werden und dass mindestens zwischen zwei Titan-basierten Schichten eine Zwischenschicht abgeschieden wird.

20. Verfahren nach einem der Ansprüche 13 bis 17, **dadurch gekennzeichnet, dass** die Schichten der Beschichtung in Abhängigkeit vom Werkstoff in einer Dicke bis zu 20 µm, vorzugsweise bei einer Aluminiumoxidschicht, beziehungsweise bis zu 10 µm, vorzugsweise bei titanbasierten Schichten, abgeschieden werden.

21. Verfahren nach einem der Ansprüche 13 bis 20, **dadurch gekennzeichnet, dass** die Beschichtung vorzugsweise auf Bauteile aus einem der Werkstoffe Siliziumnitrid, SiAlON, Aluminiumnitrid oder auf Al₂O₃-Basis abgeschieden wird.

## Claims

1. A structural component made of a metallic or ceramic material for the metal-removing or metal-forming processing of work pieces, which has a coating of hard material, wherein the coating is built up from a plurality of layers, and the layers can also comprise different materials, **characterised in that** arranged at least between two layers (4, 9) of the coating (3) there is an intermediate layer (5) which is used to reduce the stresses between the layers of the coating (3) and is formed predominantly or exclusively from a metallic material component of an element in the fourth to eighth sub-group of the fourth and fifth period of the Periodic Table depending on the parameters adjusted during the coating or the available quantity of the metallic material component as a cohesive layer (6) of the metallic material component or as a part layer (7) with intercalations (8) of the metallic material component.

2. A structural component according to claim 1, **characterised in that** the intermediate layer (5) is approximately 0.05 µm to approximately 5 µm thick.

3. A structural component according to claim 1 or 2, **characterised in that** the element of the material component (6, 8) of the intermediate layer (5) is an element in the eighth sub-group of the fourth period of the Periodic Table.

4. A structural component according to one of claims 1 to 3, **characterised in that** the layers (4, 9) of the coating (3) comprise a material based on titanium.

5. A structural component according to claim 4, **characterised in that** the thickness of the layer (4, 9) is up to 10 µm.

6. A structural component according to one of claims 1 to 3, **characterised in that** the coating (3) is covered by a layer (10) comprising at least one of the modifications of aluminium oxide.

7. A structural component according to claim 6, **characterised in that** the thickness of the layer (10) is up to 20 µm.

8. A structural component according to one of claims 1 to 7, **characterised in that** a coating (3) comprising a plurality of layers (4, 9, 10) is built up from an alternating sequence of layers based on titanium (4, 9), and from aluminium oxide (10) in at least one of the modifications thereof.

9. A structural component according to claim 8, **characterised in that** a coating of the structural component is built up from a plurality of layers as follows: a plurality of layers based on titanium, a layer of aluminium oxide in the α and/or κ modification and optionally one or more covering layers based on titanium, wherein arranged at least between two layers based on titanium there is an intermediate layer.

10. A structural component according to one of claims 1 to 9, **characterised in that** the substrate material (2) of the structural component (1) is silicon nitride or SiAlON.

11. A structural component according to one of claims 1 to 9, **characterised in that** the substrate material of the structural component is aluminium nitride.

12. A structural component according to one of claims 1 to 9, **characterised in that** the substrate material of the structural component is a material based on Al₂O₃.

13. A process for the application of a coating of hard material to a structural component made of a metallic or ceramic material as the substrate for the metal-removing or metal-forming processing of work pieces, wherein the coating can be built up from a plurality of layers, and the layers can also comprise different materials, in particular according to one of claims 1 to 12, **characterised in that** during application of the layers, by the PVD, CVD or plasma-CVD processes, deposited likewise from the gas phase between two layers of the coating there is at least one intermediate layer which is used to reduce the stresses between the layers of the coating, wherein this intermediate layer is formed predominantly or exclusively from a metallic material component of an element in the fourth to eighth sub-group of the fourth and fifth period of the Periodic Table depending on the parameters adjusted during the coating or the available quantity of the metallic material component as a cohesive layer of the metallic material component or as a layer of the material component of the hard-material layers of the coating with intercalations of the metallic material component.

14. A process according to claim 13, **characterised in that** the deposition quantity of the element of the material component is controlled by varying the pressure.

15. A process according to claim 14, **characterised in that** the intermediate layer is formed by reducing the pressure.

16. A process according to one of claims 13 to 15, **characterised in that** the thickness of the intermediate layer is controlled by way of the quantity of the element held in readiness for the deposition.

17. A process according to one of claims 13 to 16, **characterised in that** the intermediate layer is built up to a thickness of from 0.05 µm to 5 µm.

18. A process according to one of claims 13 to 17, **characterised in that** in the case of a coating comprising a plurality of layers on the structural component, layers based on titanium and layers of aluminium oxide in at least one of the modifications thereof are deposited in alternating sequence.

19. A process according to claim 18, **characterised in that** in the case of a coating of the structural component comprising a plurality of layers in the first instance layers based on titanium, followed by a layer of aluminium oxide in the α and/or κ modification and optionally followed by one or more covering layers based on titanium are applied, and **in that** deposited at least between two layers based on titanium there is an intermediate layer.

20. A process according to one of claims 13 to 17, **characterised in that** the layers of the coating are deposited depending on the material, in a thickness of up to 20 µm, preferably in the case of a layer of aluminium oxide, or up to 10 µm, preferably in the case of layers based on titanium, respectively.

21. A process according to one of claims 13 to 20, **characterised in that** the coating is preferably deposited on structural components made of one of the materials silicon nitride, SiAlON, aluminium nitride or based on Al₂O₃.

## Revendications

1. Composant en matériau métallique ou céramique, destiné à l'usinage de pièces par déformation ou par enlèvement de copeaux et présentant un revêtement de matériau dur, lequel revêtement est formé de plusieurs couches qui peuvent être faites de matériaux différents, **caractérisé en ce qu'**il y a, au moins entre deux couches (4, 9) du revêtement (3), une couche intermédiaire (5) servant au relâchement des contraintes entre les couches du revêtement (3), qui est principalement ou exclusivement formée d'un constituant métallique en un élément des groupes secondaires IV à VIII des quatrième et cinquième périodes du système périodique et prend, en fonction des paramètres ajustés lors du revêtement ou de la quantité disponible de constituant métallique, l'aspect d'une couche continue (6) du constituant métallique ou l'aspect d'une couche partielle (7) contenant des inclusions (8) du constituant métallique.

2. Composant conforme à la revendication 1, **caractérisé en ce que** la couche intermédiaire (5) est épaisse d'environ 0,05 à environ 5 µm.

3. Composant conforme à la revendication 1 ou 2, **caractérisé en ce que** l'élément du constituant (6, 8) de la couche intermédiaire (5) est un élément du groupe secondaire VIII de la quatrième période du système périodique.

4. Composant conforme à l'une des revendications 1 à 3, **caractérisé en ce que** les couches (4, 9) du revêtement (3) sont faites d'un matériau à base de titane.

5. Composant conforme à la revendication 4, **caractérisé en ce que** l'épaisseur des couches (4, 9) vaut jusqu'à 10 µm.

6. Composant conforme à l'une des revendications 1 à 3, **caractérisé en ce que** le revêtement (3) est recouvert d'une couche (10) d'au moins l'une des variétés d'oxyde d'aluminium.

7. Composant conforme à la revendication 6, **caractérisé en ce que** ladite couche est épaisse (10) de à 20 µm.

8. Composant conforme à l'une des revendications 1 à 7, **caractérisé en ce que** la structure d'un revêtement (3) constitué de plusieurs couches (4, 9, 10) consiste en une série de couches qui sont alternativement à base de titane (4, 9) et en oxyde d'aluminium (10) dans au moins l'une de ses variétés.

9. Composant conforme à la revendication 8, **caractérisé en ce qu'**il porte un revêtement constitué de plusieurs couches, qui présente la structure suivante : plusieurs couches à base de titane, une couche d'oxyde d'aluminium de variété alpha et/ou kappa, et le cas échéant, une ou plusieurs couches de recouvrement à base de titane, avec une couche intermédiaire disposée au moins entre deux couches à base de titane.

10. Composant conforme à l'une des revendications 1 à 9, **caractérisé en ce que** le matériau de substrat (2) du composant (1) est un nitrure de silicium ou un sialon.

11. Composant conforme à l'une des revendications 1 à 9, **caractérisé en ce que** le matériau de substrat du composant est un nitrure d'aluminium.

12. Composant conforme à l'une des revendications 1 à 9, **caractérisé en ce que** le matériau de substrat du composant est un matériau à base d'oxyde d'aluminium Al₂O₃.

13. Procédé de dépôt d'un revêtement de matériau dur sur un composant en matériau métallique ou céramique servant de substrat, destiné à l'usinage de pièces par déformation ou par enlèvement de copeaux, lequel revêtement peut être formé de plusieurs couches qui peuvent être faites de matériaux différents, en particulier pour un composant conforme à l'une des revendications 1 à 12, **caractérisé en ce que**, lors d'un dépôt de couches effectué selon un procédé PVD, CVD ou CVD assisté par plasma, on dépose également par précipitation à partir de la phase gazeuse, entre deux couches du revêtement, au moins une couche intermédiaire servant au relâchement des contraintes entre les couches du revêtement, laquelle couche intermédiaire, principalement ou exclusivement formée d'un constituant métallique en un élément des groupes secondaires IV à VIII des quatrième et cinquième périodes du système périodique, prend, en fonction des paramètres ajustés lors du revêtement ou de la quantité disponible de constituant métallique, l'aspect d'une couche continue du constituant métallique ou l'aspect d'une couche du constituant de la couche de matériau dur du revêtement, contenant des inclusions du constituant métallique.

14. Procédé conforme à la revendication 13, **caractérisé en ce que** c'est en faisant varier la pression qu'on règle la quantité déposée de l'élément du constituant métallique.

15. Procédé conforme à la revendication 13, **caractérisé en ce que** l'on forme la couche intermédiaire en faisant baisser la pression.

16. Procédé conforme à l'une des revendications 13 à 15, **caractérisé en ce que** l'épaisseur de la couche intermédiaire est commandée par la quantité de l'élément disponible pour le dépôt.

17. Procédé conforme à l'une des revendications 13 à 16, **caractérisé en ce qu'**on dépose la couche intermédiaire jusqu'à ce qu'elle atteigne une épaisseur de 0,05 à 5 µm.

18. Procédé conforme à l'une des revendications 13 à 17, **caractérisé en ce que**, pour un revêtement constitué de plusieurs couches, on dépose en alternance sur le composant des couches à base de titane et des couches en oxyde d'aluminium, en l'une au moins de ses variétés.

19. Procédé conforme à la revendication 18, **caractérisé en ce que**, pour doter le composant d'un revêtement constitué de plusieurs couches, on dépose d'abord des couches à base de titane, puis là-dessus une couche d'oxyde d'aluminium de variété alpha et/ou kappa, et là-dessus, le cas échéant, une ou plusieurs couches de recouvrement à base de titane, et **en ce qu'**on dépose une couche intermédiaire au moins entre deux couches à base de titane.

20. Procédé conforme à l'une des revendications 13 à 17, **caractérisé en ce qu'**on dépose les couches du revêtement, en fonction du matériau, en une épaisseur qui vaut jusqu'à 20 µm, de préférence dans le cas d'une couche d'oxyde d'aluminium, ou en une épaisseur qui vaut jusqu'à 10 µm, de préférence dans le cas des couches à base de titane.

21. Procédé conforme à l'une des revendications 13 à 20, **caractérisé en ce qu'**on dépose le revêtement, de préférence, sur un composant en un matériau à base d'oxyde d'aluminium Al₂O₃ ou en l'un des matériaux sui-vants : nitrure de siilicium, sialon et nitrure d'aluminium.
